# EUROPÄISCHE PATENTSCHRIFT

(11) **EP 4 705 874 B1**
(45) Veröffentlichungstag und Bekanntmachung des Hinweises auf die Patenterteilung: **10.06.2026**
(21) Anmeldenummer: 25701139.5
(22) Anmeldetag: 15.01.2025
(51) Int. Cl.: G06F 8/65, G06F 11/10, G06F 11/14, G06F 11/16

(54) **VERFAHREN ZUM AKTUALISIEREN EINER SOFTWAREKOMPONENTE AUF EINEM MIKROCONTROLLER, AKTUALISIERUNGSSYSTEM UND FAHRZEUG**
METHOD FOR UPDATING A SOFTWARE COMPONENT ON A MICROCONTROLLER, UPDATE SYSTEM, AND VEHICLE
PROCÉDÉ DE MISE À JOUR D'UN COMPOSANT LOGICIEL SUR UN MICROCONTRÔLEUR, SYSTÈME DE MISE À JOUR ET VÉHICULE

(30) Priorität: 20.01.2024 DE 102024000178
(43) Veröffentlichungstag der Anmeldung: 11.03.2026
(73) Patentinhaber: Mercedes-Benz Group AG, 70372 Stuttgart (DE)
(72) Erfinder: ZHANG, Xinquan, 76337 Waldbronn (DE); ZHANG, Hongyan, 70469 Stuttgart (DE)
(74) Vertreter: Novagraaf Group
(86) Internationale Anmeldenummer: PCT/EP2025/050932
(87) Internationale Veröffentlichungsnummer: WO 2025/153558

(56) Entgegenhaltungen:
- EP-A1- 2 339 494
- EP-A1- 4 141 651
- CN-A- 116 755 737

## Beschreibung

Die Erfindung betrifft ein Verfahren zum Aktualisieren einer Softwarekomponente auf einem Mikrocontroller nach der im Oberbegriff von Anspruch 1 näher definierten Art, ein zur Durchführung des Verfahrens geeignetes Aktualisierungssystem nach der im Oberbegriff von Anspruch 8 näher definierten Art sowie ein Fahrzeug mit einem solchen Aktualisierungssystem.

Mikrocontroller werden auf den verschiedensten technischen Gebieten zur Übernahme von Aufgaben eingesetzt. Mikrocontroller können in Form von eingebetteten Systemen beispielsweise in Haushaltsgeräten wie Waschmaschinen oder auch in Fahrzeugen wie Pkws zum Übernehmen von Steuerungsfunktionen integriert sein. Zudem können Mikrocontroller in höherwertige Computersysteme eingebettet sein, wie beispielsweise in ein Netzwerkgerät wie einen Switch.

Es kann erforderlich sein eine Softwarekomponente eines Mikrocontrollers zu aktualisieren. Ein nichtflüchtiger Speicher des Mikrocontrollers kann dabei in eine Primärpartition und eine Sicherungspartition unterteilt sein. Auf der Primärpartition kann eine Firmware vorgehalten werden, die durch einen Bootloader zum Booten des Mikrocontrollers initialisiert wird. In der Sicherungspartition ist eine Kopie der Firmware gespeichert, um, sollte die Firmware in der Primärpartition korrumpiert werden, den Mikrocontroller von der Sicherungspartition booten zu können. Um eine Fehlerhafte Firmware in der Primärpartition zu erkennen führt der Bootloader eine hashwertbasierte Integritätsprüfung des Speicherinhalts der Primärpartition durch. Hierzu wird ein Hashwert aus dem in der Primärpartition vorgehaltenen Programmcode gebildet und mit einem Referenz-Hashwert verglichen. Stimmen beide Hashwerte überein, so bedeutet dies, dass der Programmcode der Firmware dem Sollzustand entspricht. Weichen die beiden Hashwerte hingegen voneinander ab, so bedeutet dies, dass der Programmcode der Firmware korrumpiert ist. In diesem Falle greift der Bootloader zum Booten auf die Sicherungspartition zu. Der Programmcode des Bootloaders selbst ist typischerweise nicht veränderbar, auch als "hardcoded" bezeichnet. Somit lässt sich der Bootprozess bzw. Bootablauf nicht an die eigenen Bedürfnisse anpassen.

Ferner sind Mikrocontroller bekannt, bei denen die Primärpartition und Sicherungspartition des nichtflüchtigen Speichers jeweils in mehrere logische Blöcke unterteilt sind. Dabei kann in einem ersten logischen Block einer jeweiligen Partition die Firmware vorgehalten werden und in einem zweiten logischen Block der Programmcode eines Zusatzprogramms, wie beispielsweise der Regelsatz für eine Firewall. Dabei kann es erforderlich sein, dass die Firmware zur korrekten Funktionsweise auf den Programmcode des Zusatzprogramms zugreifen muss.

Die Aktualisierung der Softwarekomponenten eines Mikrocontrollers erfolgt dabei blockweise. So wird zuerst der Programmcode des ersten logischen Blocks und anschließend der Programmcode des zweiten logischen Blocks usw. durch ein entsprechendes Update ausgetauscht bzw. angepasst. Während dem Aktualisieren von Softwarekomponenten kann es zu unerwarteten Fehlern kommen, wie beispielsweise ein Abschalten oder Neustarten des Mikrocontrollers, beispielsweise aufgrund eines Zusammenbrechens der Spannungsversorgung. Dies kann dazu führen, dass die in die jeweiligen logischen Blöcke geschriebenen Daten Fehler aufweisen oder unvollständig sind, wodurch besagter Speicherinhalt korrumpiert wird.

Dies kann zu einem besonderen Problemszenario führen. So kann der Speicherinhalt des ersten logischen Blocks erfolgreich aktualisiert werden, wohingegen, beispielsweise aufgrund besagten Stromausfalls, der Speicherinhalt lediglich im zweiten logischen Block korrumpiert wird. Die hashbasierte Integritätsprüfung des Bootloaders wird dabei ausschließlich auf die im ersten logischen Block vorgehaltene Firmware angewendet. Da die Firmware dem Sollzustand entspricht, verläuft auch die Integritätsprüfung erfolgreich. Der Programmcode im zweiten logischen Block ist jedoch fehlerhaft. Dies führt dazu, dass der Bootvorgang des Mikrocontrollers in einer endlos ablaufenden Bootschleife gefangen werden kann, da die Firmware nicht richtig initialisiert werden kann, der Bootloader jedoch nicht zur Sicherungspartition wechselt. Der Mikrocontroller wird hierdurch unbrauchbar gemacht, auch als "gebricked" bezeichnet. Dies gilt es zu vermeiden.

Aus der EP 2 339 494 A1 ist ein automatisiertes, modulares und sicheres Update für eine Bootfirmware bekannt. Die Druckschrift beschreibt das Vorsehen einer in Module unterteilten Firmware, anstelle einer monolithischen Firmware. Im Aktualisierungsprozess können einzelne Module der Firmware aktualisiert werden. Kommt es zu einem Fehler, kann eine Sicherungskopie der Firmware aus einem Speicher ausgelesen werden und die Sicherungskopie der Firmware für den Bootvorgang genutzt werden. Bei dem somit bootbaren System handelt es sich beispielsweise um einen Supercomputer, Minicomputer, Server, PC, einen Laptop, Tabletcomputer, Smartphone oder dergleichen.

Die CN 116 755 737 A offenbart ein Verfahren zur OTA-Softwareaktualisierung für Fahrzeuge, bei dem der Speicher des Fahrzeugs vorab in eine erste und eine zweite Partition unterteilt wird. Bei einem Upgrade bestimmt die OTA-Anwendung eine gültige Partition aus diesen beiden, die dann für die Durchführung der Softwareaktualisierung verwendet wird.

In der EP 4 141 651 A1 wird ein Verfahren zur Aktualisierung von Betriebssystemdaten auf einem elektronischen Gerät beschrieben. Nach dem Start lädt das Gerät Daten aus einer Basispartition, einer ersten statischen Partition und einer dynamischen Partition, um ein erstes Betriebssystem auszuführen. Anschließend wird ein Patch-Paket bezogen und die zweite statische Partition basierend darauf aktualisiert. Danach erfolgt ein Neustart, wobei die Startsequenz von der zweiten statischen Partition ausgeht. Schließlich werden Daten aus der Basispartition, der zweiten statischen Partition und der dynamischen Partition geladen, um das Betriebssystem mit aktualisierten statischen Daten auszuführen.

Der vorliegenden Erfindung liegt die Aufgabe zugrunde ein verbessertes Verfahren zum Aktualisieren einer Softwarekomponente auf einem Mikrocontroller anzugeben, durch dessen Ausführung zuverlässig verhindert wird, dass ein Mikrocontroller dessen Bootvorgang das Laden von Daten aus wenigstens einem ersten logischen Block und einem sich daran anschließenden zweiten logischen Block erfordert, bei einem unerwarteten Fehler während eines Aktualisierungsvorgangs unbrauchbar gemacht wird.

Erfindungsgemäß wird diese Aufgabe durch ein Verfahren zum Aktualisieren einer Softwarekomponente auf einem Mikrocontroller mit den Merkmalen des Anspruchs 1 gelöst. Vorteilhafte Ausgestaltungen und Weiterbildungen sowie ein Aktualisierungssystem zur Durchführung des Verfahrens und ein Fahrzeug mit einem solchen Aktualisierungssystem ergeben sich aus den hiervon abhängigen Ansprüchen.

Ein gattungsgemäßes Verfahren zum Aktualisieren einer Softwarekomponente auf einem Mikrocontroller, wobei der Mikrocontroller einen Bootloader und einen nichtflüchtigen Speicher aufweist, unterteilt in wenigstens eine Primärpartition und eine Sicherungspartition, jeweils wiederum aufweisend wenigstens einen ersten und einen zweiten logischen Block, wobei im ersten logischen Block der Programmcode einer Firmware gespeichert ist, im zweiten logischen Block der Programmcode eines Zusatzprogramms gespeichert ist und auf der Sicherungspartition eine Sicherungskopie des Speicherinhalts der Primärpartition vorgehalten wird, und wobei der Bootloader in einem Bootprozess zum Initiieren der Firmware auf den ersten logischen Block auf der Primärpartition zugreift, wobei der Bootloader eine hashwertbasierte Integritätsprüfung des Speicherinhalts durchführt, und wobei der Bootloader mit der Initialisierung der Firmware fortführt, wenn die Integritätsprüfung ein positives Ergebnis liefert oder auf den ersten logischen Block der Sicherungspartition zum Initiieren der Kopie des Programmcodes der Firmware zugreift, wenn die Integritätsprüfung ein negatives Ergebnis liefert, wird erfindungsgemäß weitergebildet durch die folgenden Verfahrensschritte:
- Ändern des für die Integritätsprüfung des ersten logischen Blocks der Primärpartition verwendeten Hashwerts von einem ersten Ausgangswert in einen ersten Übergangswert, vor dem Aktualisieren der Softwarekomponente;
- Aktualisieren der Softwarekomponente in zumindest einem der logischen Blöcke auf der Primärpartition; wobei
- wenn der Speicherinhalt des ersten und zweiten logischen Blocks geändert wird, zuerst der Speicherinhalt des ersten logischen Blocks geändert wird, dann der neu erhaltene Hashwert des ersten logischen Blocks von einem zweiten Ausgangswert in einen zweiten Übergangswert geändert wird, dann der Speicherinhalt des zweiten logischen Blocks geändert wird, und dann der Hashwert des ersten logischen Blocks vom zweiten Übergangswert zurück zum zweiten Ausgangswert geändert wird; oder
- wenn der Speicherinhalt nur des ersten logischen Blocks geändert wird, der neu erhaltene Hashwert des ersten logischen Blocks als zweiter Ausgangswert belassen wird; oder
- wenn der Speicherinhalt nur des zweiten logischen Blocks geändert wird, der Speicherinhalt des zweiten logischen Blocks geändert wird, und dann der Hashwert des ersten logischen Blocks vom ersten Übergangswert zurück zum ersten Ausgangswert geändert wird; und
- Neustarten des Mikrocontrollers.

Dem erfindungsgemäßen Verfahren liegt die Idee zugrunde durch das Ändern des Hashwerts des ersten logischen Blocks der Primärpartition dem Bootloader vorzutäuschen, dass der Programmcode im ersten logischen Block korrumpiert ist. Dies führt dazu, dass, sollte während dem Aktualisieren der Softwarekomponenten im zweiten logischen Block der Primärpartition ein unerwarteter Fehler auftreten, wodurch der Speicherinhalt des zweiten logischen Blocks korrumpiert wird, der Bootloader auf die Sicherungspartition zum Laden der dort abgelegten Softwarekomponenten zum Initialisieren der Firmware zuzugreifen würde, obwohl eigentlich der Programmcode der Firmware im ersten logischen Block der Primärpartition intakt ist. Hierdurch lässt sich zuverlässig verhindern, dass der Mikrocontroller durch einen besagten unerwarteten Fehler während dem Aktualisieren besagter Softwarekomponente unbrauchbar gemacht wird.

Dabei gilt es zwischen drei verschiedenen Anwendungsfällen zu unterscheiden. So ist es möglich, dass die Softwarekomponente ausschließlich im zweiten logischen Block, ausschließlich im ersten logischen Block oder aber sowohl im ersten, als auch dem zweiten logischen Block auf der Primärpartition aktualisiert werden muss.

Das Aktualisieren der Softwarekomponente im ersten logischen Block führt zwangsweise dazu, dass auch ein neuer Hashwert für den ersten logischen Block erzeugt wird, da sich der Programmcode, auf dem ja die Berechnung des Hashwerts beruht, ändert.

Anfangs steht noch nicht fest, welche logischen Blöcke aktualisiert werden sollen. Sicherheitshalber wird deshalb der vorhandene Hashwert des ersten logischen Blocks der Primärpartition vom ersten Ausgangswert in den ersten Übergangswert verändert. Dabei kann der Übergangswert jeden erdenklichen vom ersten Ausgangswert abweichenden Wert annehmen. Der genaue Wert des Übergangswerts spielt keine Rolle, solange er sich vom ersten Ausgangswert unterscheidet. Es kommen die verschiedensten Techniken infrage, wie jeweilige Übergangswerte bestimmt werden können. Der erste Übergangswert kann beispielsweise nach Bedarf neu berechnet werden, insbesondere generiert aus dem Ausgangswert oder aber auch aus einer vorgefertigten Liste initial berechneter alternativer Übergangswerte ausgelesen werden.

Wird lediglich der Speicherinhalt des ersten logischen Blocks der Primärpartition geändert, so wird nun zwangsweise ein neuer Hashwert für die Integritätsprüfung bereitgestellt. Der dem ersten Übergangswert entsprechende Hashwert wird hierdurch ersetzt durch einen Hashwert entsprechend dem zweiten Ausgangswert. In einem solchen Fall sind keine weiteren Sondermaßnahmen erforderlich, da der Speicherinhalt des zweiten logischen Blocks nicht geändert wird. Nach erfolgreicher Aktualisierung des Speicherinhalts des ersten logischen Blocks kann daher der Mikrocontroller neu gestartet werden und der Bootprozess basierend auf der aktualisierten Firmware durchgeführt werden. Kam es während der Aktualisierung des Speicherinhalts des ersten logischen Blocks der Primärpartition zu einem Fehler, so würde der für die Integritätsprüfung berechnete Hashwert nicht mit dem neu erhaltenen zweiten Ausgangswert übereinstimmen, sodass automatisch der Bootloader auf die Firmware im ersten logischen Block der Sicherungspartition zugreifen würde. Somit wäre ein zuverlässiger Bootvorgang trotz Fehlers während der Aktualisierung möglich.

Mehr Aufwand ist erforderlich, wenn hingegen der Speicherinhalt des zweiten logischen Blocks aktualisiert werden muss. Wird lediglich der Speicherinhalt des zweiten logischen Blocks auf der Primärpartition, nicht jedoch der Speicherinhalt des ersten logischen Blocks aktualisiert, so wird der Hashwert des ersten logischen Blocks erst nach dem erfolgreichen Aktualisieren des Speicherinhalts des zweiten logischen Blocks zurück vom ersten Übergangswert zum ersten Ausgangswert geändert. Danach kann der Mikrocontroller neu gestartet werden. Bei einer erfolgreichen Aktualisierung kann die Firmware erfolgreich durch das Auslesen der Blöcke der Primärpartition durch den Bootloader initialisiert werden. Käme es hingegen zu einem unerwarteten Fehlerfall während dem Aktualisieren des Speicherinhalts des zweiten logischen Blocks der Primärpartition, so würde der entsprechende Programmcode korrumpiert werden. Dies kann gemäß dem Stand der Technik dazu führen, dass der Bootloader in einer Endlosschleife hängen bleibt, da der Speicherinhalt des zweiten logischen Blocks nicht korrekt gelesen werden kann. Da erfindungsgemäß jedoch der Hashwert für den ersten logischen Block der Primärpartition dem ersten Übergangswert entspricht und nicht dem ersten Ausgangswert, liefert eine entsprechende hashwertbasierte Integritätsprüfung für den ersten logischen Block ein negatives Ergebnis. Dies hat zur Folge, dass der Bootloader auf die Sicherungspartition zugreifen würde und dort die jeweils integren Softwarekomponenten aus dem ersten und zweiten logischen Block auslesen würde. So wäre erneut ein erfolgreicher Bootvorgang möglich. Nach einer erfolgreichen Aktualisierung des Speicherinhalts des zweiten logischen Blocks wird dann der ersten Übergangswert zurück zum ersten Ausgangswert geändert, sodass der Bootvorgang wie gehabt erfolgen kann.

Wird sowohl der Speicherinhalt des ersten logischen Blocks, als auch des zweiten logischen Blocks auf der Primärpartition aktualisiert, so muss erneut der Hashwert des ersten logischen Blocks verändert werden. Wie bereits erwähnt, führt die Änderung des Speicherinhalts des ersten logischen Blocks dazu, dass auch ein für die Integritätsprüfung zu verwendender neuer Hashwert erzeugt wird. Dieser wird als zweiter Ausgangswert bezeichnet. Bevor die Aktualisierung des Speicherinhalts des zweiten logischen Blocks erfolgen kann, muss somit der zweite Ausgangswert des Hashwerts des ersten logischen Blocks in den zweiten Übergangswert geändert werden. Erst dann ist erneut eine Absicherung vor dem unerwünschten Hängenbleiben in einer Bootschleife möglich. Nun kann der Speicherinhalt des zweiten logischen Blocks aktualisiert werden, woraufhin nach erfolgreicher Aktualisierung der zweite Übergangswert zurück in den zweiten Ausgangswert geändert werden kann. Danach kann der Mikrocontroller erneut gestartet werden.

Eine vorteilhafte Ausgestaltung des erfindungsgemäßen Verfahrens sieht dabei vor, dass zum Ändern eines respektiven Hashwerts, ein bitweiser Operator auf zumindest einen Teil des Hashwerts angewendet wird, insbesondere in Form von bitwise-NOT oder bit-shift. Mit Hilfe bitweiser Operatoren ist es möglich Hashwerte mit geringem Rechenaufwand reproduzierbar zu ändern. Eine jeweilige Ziffer eines Hashwerts ist digital kodiert in Form von Einsen und Nullen. Durch die Anwendung von bitwise-NOT werden alle Nullen in Einsen gewandelt und alle Einsen in Nullen. Somit wird erzielt, dass sich der Übergangswert zum jeweiligen Ausgangswert unterscheidet. Zudem lassen sich die Hashwerte besonders einfach ineinander überführen, indem lediglich jeweilige Einsen und Nullen miteinander vertauscht werden. Anstelle von bitwise-NOT kann auch ein bit-shift erfolgen. Hierzu werden die Ziffern bzw. Zeichen des Hashwerts kodierende Bits in ihrer Position nach links oder rechts verschoben. Es kann sich beispielsweise um einen sogenannten arithmetic shift, logical shift oder circular shift handeln. Ein derartig durchgeführtes Ändern von Hashwerten ist besonders recheneffizient und führt damit nicht dazu, dass die Latenz bei der Durchführung des erfindungsgemäßen Verfahrens ansteigt. Es kann der gesamte Hashwert geändert werden oder nur Teile davon, beispielsweise das erste Byte eines respektiven Hashwerts.

Entsprechend einer weiteren vorteilhaften Ausgestaltung des erfindungsgemäßen Verfahrens wird nach dem erfolgreichen Neustarten des Mikrocontrollers und Booten von der auf der Primärpartition vorgehaltenen Firmware der Speicherinhalt der Primärpartition auf die Sicherungspartition kopiert. Somit ist es möglich auch den Speicherinhalt der Sicherungspartition aktuell zu halten. Dabei darf der Speicherinhalt der Sicherungspartition erst dann geändert werden, wenn sichergestellt wurde, dass die Integrität des Speicherinhalts der Primärpartition gewahrt ist. Sollte es im weiteren Verlauf zu einem Fehler kommen, woraufhin ein Booten basierend auf dem Speicherinhalt der Primärpartition nicht möglich ist, so kann erfolgreich von der Sicherungspartition gebootet werden. Da auch hier die jeweiligen Softwarekomponenten aktualisiert wurden, ist sichergestellt, dass keine veraltete Programmversion geladen wird.

Eine weitere vorteilhafte Ausgestaltung des erfindungsgemäßen Verfahrens sieht ferner vor, dass vor dem Ändern des Hashwerts des ersten logischen Blocks auf der Primärpartition vom ersten Ausgangswert zum ersten Übergangswert überprüft wird, ob die Primärpartition und die Sicherungspartition denselben Speicherinhalt aufweisen, wobei:
- wenn ein Booten von der Primärpartition nicht möglich ist, der Speicherinhalt der Primärpartition durch den Speicherinhalt der Sicherungspartition ausgetauscht wird; oder
- wenn ein Booten von der Primärpartition möglich ist und sich der Speicherinhalt der Primärpartition zur Sicherungspartition unterscheidet, der Speicherinhalt der Primärpartition auf die Sicherungspartition kopiert wird.

Mit anderen Worten wird somit sichergestellt, dass auf zumindest einer der Partitionen eine bootfähige Programmversion vorgehalten wird. Ist eine solche bootfähige Programmversion auf der Primärpartition nicht vorhanden, so kann diese von der Sicherungspartition bezogen werden. Ist hingegen ein Booten basierend auf dem Speicherinhalts der Primärpartition möglich, so kann geprüft werden, ob der Speicherinhalt der Sicherungspartition dem Speicherinhalt der Primärpartition entspricht. Ist dies der Fall, so sind keine weiteren Maßnahmen notwendig. Unterscheidet sich hingegen der Speicherinhalt der Sicherungspartition zur Primärpartition, so kann der Speicherinhalt der Primärpartition auf die Sicherungspartition übertragen werden. Diese Prüfung wird vor dem Aktualisieren der Softwarekomponenten auf der Primärpartition durchgeführt, um den Mikrocontroller in einem stabilen Ausgangszustand für die Aktualisierungskampagne bereitzustellen.

Entsprechend einer weiteren vorteilhaften Ausgestaltung des erfindungsgemäßen Verfahrens ist es ferner vorgesehen, dass vor dem Aktualisieren der Softwarekomponente ein Speicherinhaltsübereinstimmungsflag, beschreibend, ob die Primärpartition und die Sicherungspartition denselben Speicherinhalt aufweisen, von TRUE auf FALSE gesetzt wird und der Speicherinhaltsübereinstimmungsflag nach erfolgter Aktualisierung der Softwarekomponente von FALSE auf TRUE gesetzt wird. Mit Hilfe des Speicherinhaltsübereinstimmungsflags lässt sich elektronischen Komponenten bzw. Softwarekomponenten mitteilen, ob der Speicherinhalt der Primärpartition und der Sicherungspartition übereinstimmen oder nicht. Der Speicherinhaltsübereinstimmungsflag wird dabei vor dem Durchführen der Aktualisierung auf FALSE gesetzt, da durch die Aktualisierung eine Differenz zwischen den jeweiligen Speicherinhalten entsteht. Nach der erfolgreichen Aktualisierung und nach dem Kopieren des erfolgreich aktualisierten Speicherinhalts der Primärpartition auf die Sicherungspartition kann dann der Speicherinhaltsübereinstimmungsflag wieder von FALSE auf TRUE gesetzt werden.

Eine weitere vorteilhafte Ausgestaltung des erfindungsgemäßen Verfahrens sieht ferner vor, dass eine Softwarekomponente auf einem als Switch ausgeführten Mikrocontroller aktualisiert wird. Hierbei handelt es sich um einen besonders relevanten Einsatzfall.

Bevorzugt wird dabei als Speicherinhalt des zweiten logischen Blocks ein Regelsatz einer Firewall aktualisiert. Auch hierbei handelt es sich um einen besonders relevanten Anwendungsfall. So kann der als Switch ausgeführte Mikrocontroller zum Weiterleiten und Überwachen eines Netzwerkverkehrs dienen. Dabei kann der Switch eine Firewallfunktionalität bereitstellen. Die Firewallfunktionalität kann in die Firmware des Switches integriert sein. Zum Konfigurieren der Firewall wird besagter Regelsatz angefordert. Kann der Regelsatz nicht aus dem zweiten logischen Block gelesen werden, so kann auch der Switch nicht voll funktionsfähig gestartet werden. Mit Hilfe des erfindungsgemäßen Verfahrens wird jedoch sichergestellt, dass, sollte der im zweiten logischen Block vorgehaltene Regelsatz durch einen Fehler während eines Aktualisierungsprozesses korrumpiert werden, der Switch dennoch starten kann. Somit ist ein sicherer Betrieb des Switches gewährleistet.

Bei einem Aktualisierungssystem, umfassend einen ersten und einen zweiten miteinander gekoppelten Mikrocontroller, ist es erfindungsgemäß vorgesehen, dass der erste Mikrocontroller in einem Speichermedium ein Computerprogrammprodukt vorhält, welches durch Ausführung durch einen Prozessor des ersten Mikrocontrollers den ersten Mikrocontroller dazu in die Lage versetzt, eine Softwarekomponente des zweiten Mikrocontrollers gemäß einem im vorigen beschriebenen Verfahren zu aktualisieren. Ein entsprechender zur Bereitstellung der durch das erfindungsgemäße Verfahren beschriebenen Verfahrensschritte geeigneter Programmcode, hier als Computerprogrammprodukt bezeichnet, kann also durch einen ersten Mikrocontroller bereitgestellt und ausgeführt werden. Somit kann der erste Mikrocontroller den zweiten Mikrocontroller aktualisieren. Insbesondere handelt es sich bei dem zweiten Mikrocontroller um einen Switch. Entsprechende Update-Daten kann der erste Mikrocontroller vor dem Ansteuern des zweiten Mikrocontrollers von einer externen Quelle empfangen, beispielsweise einem Internetserver oder einem USB-Dongle oder dergleichen.

Erfindungsgemäß umfasst ein Fahrzeug ein solches Aktualisierungssystem. Durch das Vorsehen eines solchen Aktualisierungssystems ist das Fahrzeug besonders zuverlässig betreibbar. Bei dem Fahrzeug kann es sich insbesondere um ein Straßenfahrzeug wie einen Pkw, Lkw, Transporter, Bus oder dergleichen handeln. Generell kann es sich auch um Schienenfahrzeug, Wasserfahrzeug oder Luftfahrzeug handeln.

Weitere vorteilhafte Ausgestaltungen des erfindungsgemäßen Verfahrens zum Aktualisieren einer Softwarekomponente auf einem Mikrocontroller ergeben sich auch aus den Ausführungsbeispielen, welche nachfolgend unter Bezugnahme auf die Figuren näher beschrieben werden.

Dabei zeigen:
- Fig. 1: eine schematische Darstellung eines Bootloaders und eines nichtflüchtigen Speichers eines zu aktualisierenden Mikrocontrollers gemäß dem Stand der Technik;
- Fig. 2: eine schematische Darstellung eines zu aktualisierenden Mikrocontrollers dessen Speicherpartitionen jeweils in einen ersten und einen zweiten logischen Block unterteilt sind, gemäß dem Stand der Technik;
- Fig. 3: zwei Tabellen, veranschaulichend den Ablauf eines aus dem Stand der Technik bekannten Aktualisierungsprozesses in einem Fehlerfall;
- Fig. 4: eine Ablaufdiagramm eines erfindungsgemäßen Verfahrens zum Aktualisieren eines Softwarekomponente auf dem Mikrocontroller;
- Fig. 5: eine Tabelle, veranschaulichend den Ablauf des erfindungsgemäßen Aktualisierungsprozesses; und
- Fig. 6: eine schematische Ansicht eines erfindungsgemäßen Fahrzeugs.

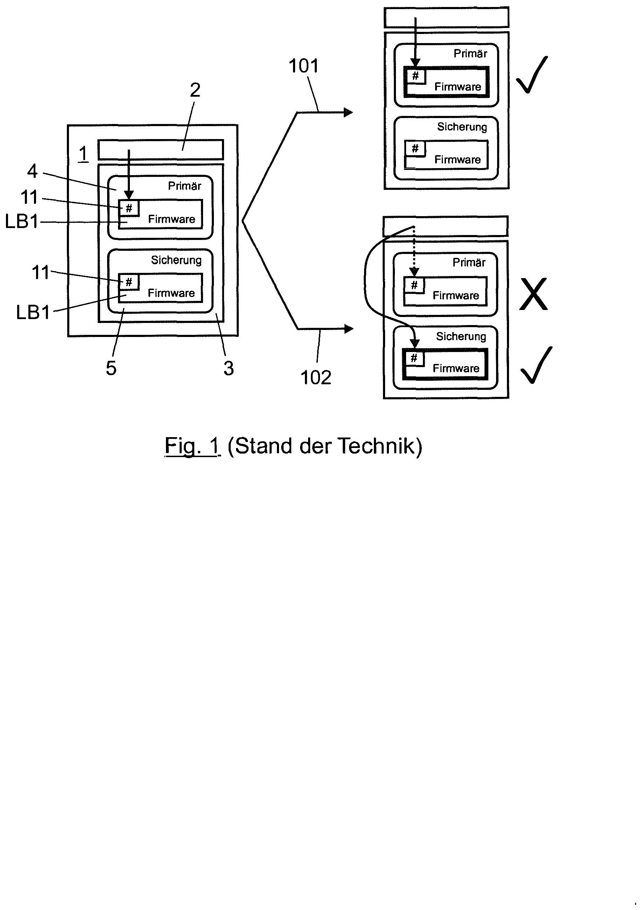

Anhand von Figur 1 wird der Bootprozess eines Mikrocontrollers 1 beschrieben. Der Mikrocontroller 1 umfasst einen Bootloader 2 sowie einen nichtflüchtigen Speicher 3, unterteilt in eine Primärpartition 4 und eine Sicherungspartition 5. Bei dem in Figur 1 gezeigten Ausführungsbeispiel sind jeweils die Primärpartition 4 und die Sicherungspartition 5 in jeweils einen ersten logischen Block LB1 unterteilt. Im ersten logischen Block LB1 wird der Programmcode einer Firmware vorgehalten. Bevor die Firmware des Mikrocontrollers 1 initialisiert wird, führt der Bootloader 2 eine hashwertbasierte Integritätsprüfung durch. In einem jeweiligen ersten logischen Block LB1 wird hierzu ein Vergleichshash 11 vorgehalten. Der Bootloader 2 berechnet einen entsprechenden Hashwert aus dem aus dem ersten logischen Block LB1 ausgelesenen Programmcode und vergleicht den somit erzeugten Hashwert mit dem Vergleichshash 11.

Wie Figur 1 zeigt, können zwei Fälle auftreten. Stimmen beide Hashwerte überein, was durch einen Pfeil 101 angedeutet ist, so ist die Integritätsprüfung erfolgreich und der Bootprozess kann auf der in der Primärpartition 4 vorgehaltenen Firmware erfolgen. Weichen die beiden Hashwerte hingegen voneinander ab, so greift der Bootloader 2 auf den in der Sicherungspartition 5 vorgehaltenen Programmcode der Firmware zu, was durch einen Pfeil 102 angedeutet ist.

Beispielsweise kann die in der Primärpartition 4 vorgehaltene Firmware aktualisiert werden. Während einer solchen Aktualisierung kann es zu einem unerwarteten Fehler kommen, woraufhin beispielsweise die Stromversorgung des Mikrocontrollers 1 zusammenbricht, sodass der Mikrocontroller 1 neu gestartet werden muss. In diesem Falle kann der Programmcode der Firmware korrumpiert werden, was besagte Initialisierung der Firmware von der Sicherungspartition 5 erfordert.

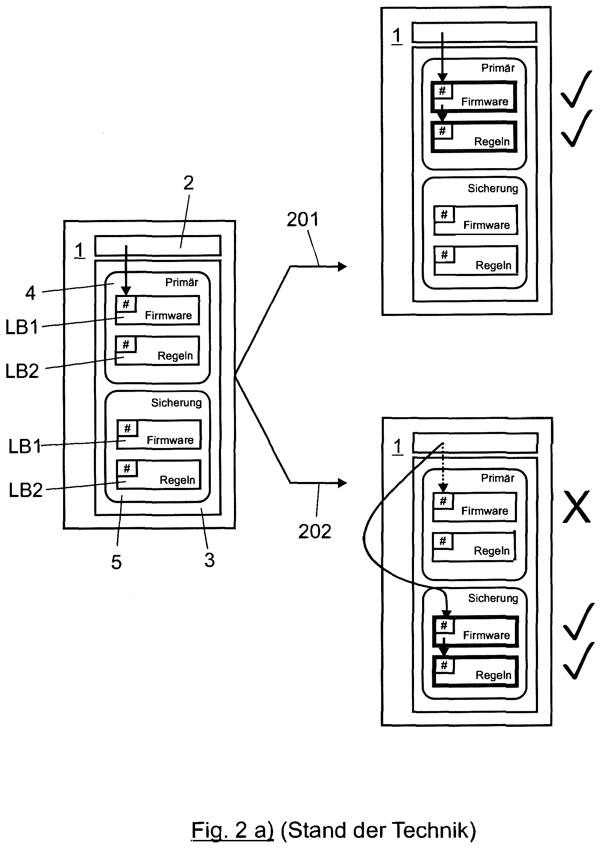

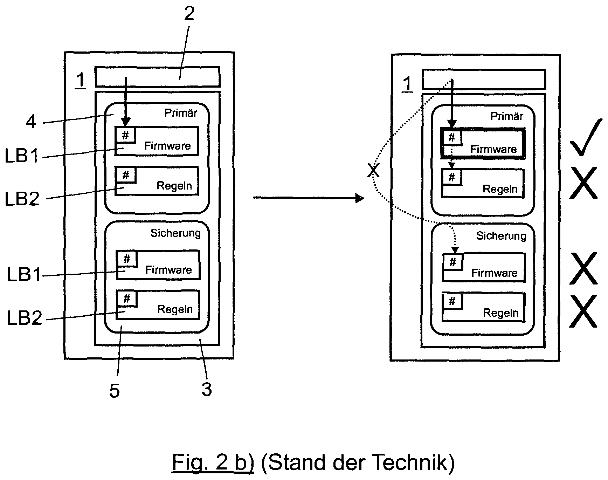

Figur 2 zeigt einen alternativen Mikrocontroller 1, bei dem die jeweilige Primärpartition 4 und Sicherungspartition 5 jeweils in wenigstens einen ersten logischen Block LB1 und einen zweiten logischen Block LB2 unterteilt ist. Dabei wird der Programmcode der Firmware im ersten logischen Block LB1 und im zweiten logischen Block LB2 der Programmcode eines Zusatzprogramms vorgehalten, beispielsweise ein Regelsatz für eine Firewall. Zum erfolgreichen Initialisieren der Firmware ist es erforderlich, dass die Firmware auf die im zweiten logischen Block LB2 vorgehaltenen Daten zugreift.

Die in den Bootloader 2 fest einprogrammierte hashwertbasierte Integrationsprüfung basiert dabei lediglich auf dem Vergleich des Vergleichshashs 11 des ersten logischen Blocks LB1 mit einem für den im ersten logischen Block LB1 enthaltenen Programmcode berechneten Hashwert. Wie Figur 2a) zeigt, gibt es auch hier wieder zwei mögliche Fälle. Stimmen die beiden Hashwerte überein, so kann der Bootprozess basierend auf dem Speicherinhalt des ersten und zweiten logischen Blocks LB1, LB2 der Primärpartition 4 erfolgen - siehe Pfeil 201. Ist hingegen der Speicherinhalt des ersten logischen Blocks LB1 der Primärpartition 4 korrumpiert, so greift der Bootloader 2 auch hier auf die Sicherungspartition 5 zu und lädt das im ersten logischen Block LB1 der Sicherungspartition 5 vorgehaltenen Programmcode der Firmware und anschließend den Speicherinhalt des zweiten logischen Blocks LB2 - siehe Pfeil 202.

Tritt ein unerwarteter Fehler während der Aktualisierung jeweiliger Softwarekomponenten des zweiten logischen Blocks LB2 der Primärpartition 4 auf, so wird lediglich der Speicherinhalt des zweiten logischen Blocks LB2 der Primärpartition 4 korrumpiert. In diesem Falle ist die Integritätsprüfung für den ersten logischen Block LB1 erfolgreich, sodass der Bootloader 2 auch nicht auf die Sicherungspartition 5 zugreifen wird. Dies ist in Figur 2b) gezeigt. Der Bootvorgang kann jedoch nicht erfolgreich beendet werden, da besagter Speicherinhalt des zweiten logischen Blocks LB2 fehlerhaft ist und damit die Firmware nicht richtig konfiguriert werden kann. Diesen Fehlerfall kann der Bootloader 2 jedoch nicht feststellen. Für die korrekte Funktionsweise der Firmware ist es jedoch erforderlich, dass diese auf Speicherinhalte des zweiten logischen Blocks LB2 zugreift. Der Mikrocontroller 1 kann somit nicht richtig arbeiten. Der Mikrocontroller 1 kann in diesem Falle umgangssprachlich auch als "gebricked" bezeichnet werden, da es keine nachträglichen Abhilfemaßnahmen gibt.

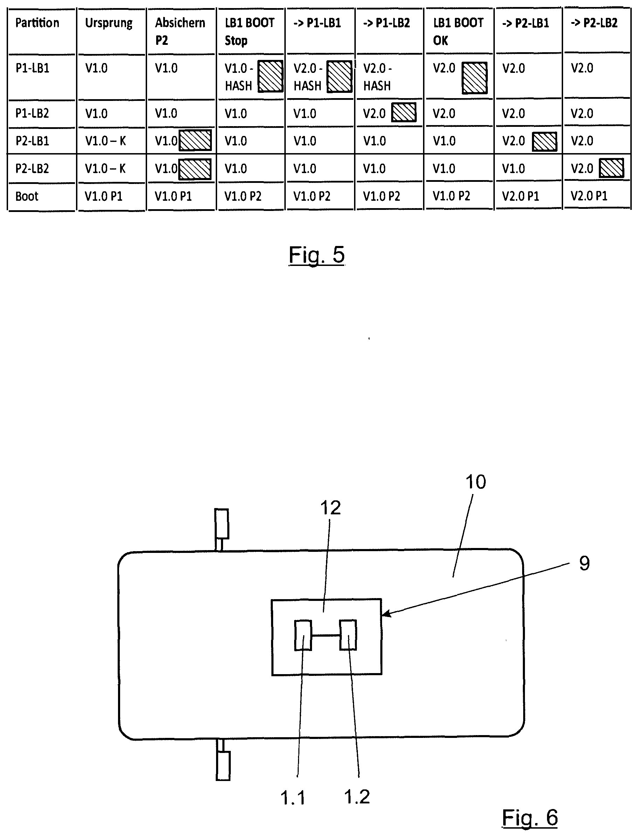

Beispielsweise kann der Mikrocontroller 1 in ein Steuergerät 12 eines in Figur 6 gezeigten Fahrzeugs 10 integriert sein, woraufhin auch besagtes Steuergerät 12 nicht richtig arbeiten kann. Im schlimmsten Falle wird hierdurch auch das Steuergerät 12 "gebricked".

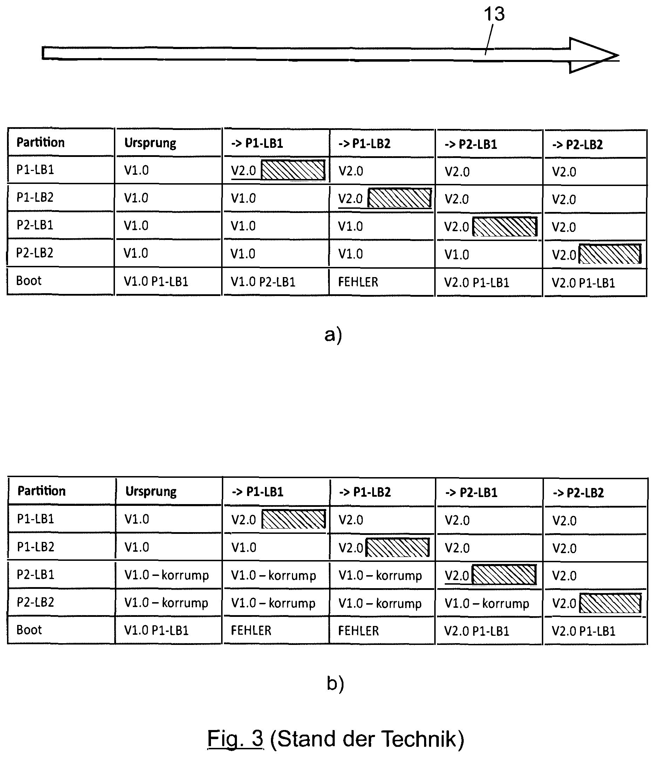

Figur 3 verdeutlicht den Ablauf einer Aktualisierungskampagne. In den Unterfiguren 3a) und 3b) ist mit fortschreitendem Aktualisierungsablauf 13 gezeigt, welche Version einer entsprechenden Softwarekomponente als Speicherinhalt in einem jeweiligen logischen Block LB1, LB2 vorgehalten wird und von welcher Partition 4, 5 im Fehlerfall gebootet wird. Ein jeweiliger Moment, zu dem es zu einem unerwarteten Fehlerfall kommt, der das Korrumpieren jeweiliger Programmcodeteile bewirkt, ist dabei durch eine Schraffur angedeutet.

Beispielhaft ist hier eine ursprüngliche Programmversion als V1.0 bezeichnet und eine aktualisierte Version als V2.0. Die zweite Spalte einer jeweiligen Tabelle zeigt dabei den Ausgangszustand des Speicherinhalts der jeweiligen logischen Blöcke LB1, LB2 der Primärpartition 4 und der Sicherungspartition 5. Die dritte Spalte zeigt den Aktualisierungsprozess für den ersten Block LB1 der Primärpartition 4. Die vierte Spalte zeigt den Aktualisierungsprozess für den zweiten logischen Block LB2 der Primärpartition 4. Die fünfte Spalte zeigt den Aktualisierungsprozess für den ersten logischen Block LB1 der Sicherungspartition 5. Die letzte Spalte der jeweiligen Tabelle zeigt den Aktualisierungsprozess für den zweiten logischen Block LB2 der Sicherungspartition 5. Die letzte Zeile der jeweiligen Tabelle zeigt welcher Programmcodeteil zum Durchführen des erfolgreichen Bootvorgangs vom Bootloader 2 geladen wird. In den Tabellen ist die Primärpartition 4 als "P1" bezeichnet und die Sicherungspartition 5 als "P2".

Figur 3a) zeigt dabei den Fall, dass in der Sicherungspartition 5 eine funktionsfähige Kopie der entsprechenden Programmcodeteile vorgehalten wird. Die in Figur 3b) gezeigte Tabelle zeigt, dass auf der Sicherungspartition 5 nicht lauffähiger Programmcode ("korrump") in den jeweiligen logischen Blöcken LB1, LB2 der Sicherungspartition 5 vorgehalten wird.

Figur 3 veranschaulicht, dass bei einer nicht erfolgreich fertiggestellten Aktualisierung des Speicherinhalts des ersten oder zweiten logischen Blocks LB1, LB2 der Primärpartition 4 der Mikrocontroller 1 betriebsunbrauchbar gemacht werden kann.

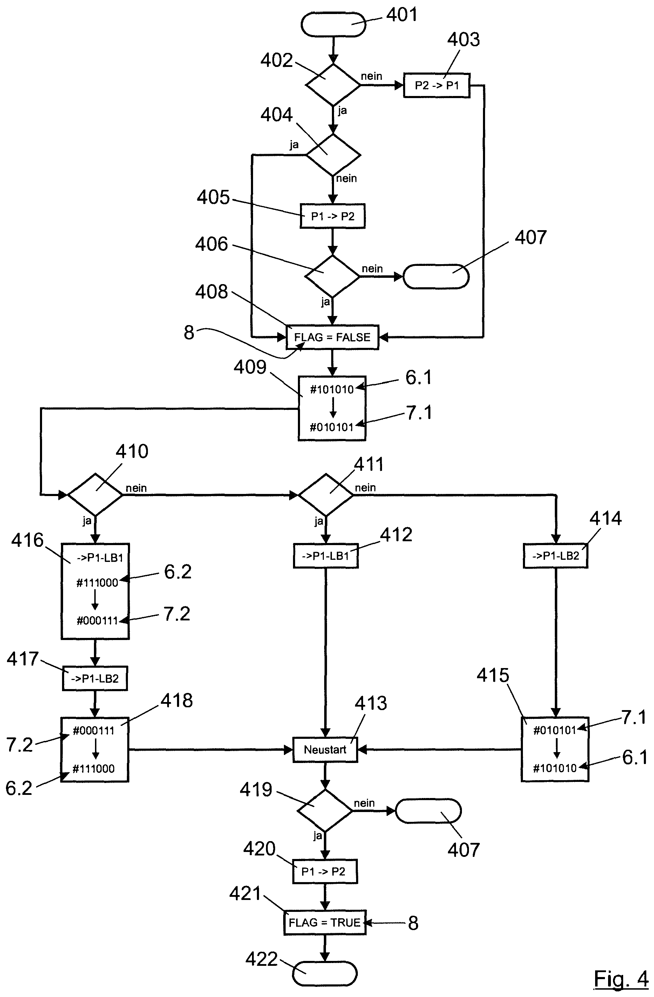

Dies lässt sich mit Hilfe eines erfindungsgemäßen Verfahrens zum Aktualisieren der Softwarekomponente auf einem Mikrocontroller 1 verhindern, dessen Ablauf in einer vorteilhaften Ausgestaltung in Figur 4 gezeigt ist. In einem Schritt 401 startet das Verfahren. In einem Schritt 402 wird geprüft, ob das Booten von der Primärpartition 4 möglich ist. Ist dies nicht möglich, so wird gemäß eines Schritts 403 der Speicherinhalt der Sicherungspartition 5 in die Primärpartition 4 geschrieben. Ist hingegen das erfolgreiche Booten von der Primärpartition 4 möglich, so wird im Schritt 404 geprüft, ob der Speicherinhalt der Primärpartition 4 und der Sicherungspartition 5 identisch sind oder nicht. Ist dies nicht der Fall, so wird im Schritt 405 der Speicherinhalt der Primärpartition 4 in die Sicherungspartition 5 geschrieben.

Im Schritt 406 kann überprüft werden, ob das Kopieren des Speicherinhalts in die Sicherungspartition 5 erfolgreich war oder nicht. Ist dies nicht der Fall, so handelt es sich im Schritt 407 um einen Fehler und der Aktualisierungsprozess wird abgebrochen. Ist hingegen eine erfolgreiche Datenübertragung erfolgt, so wird im Schritt 408 ein Speicherinhaltsübereinstimmungsflag 8 auf FALSE gesetzt. Zwar stimmen aktuell die jeweiligen Speicherinhalte überein, jedoch erfolgt nun ein Aktualisierungsprozess, woraufhin sich der jeweilige Speicherinhalt wieder unterscheiden wird.

Im Schritt 409 wird der für die Integritätsprüfung des ersten logischen Blocks LB1 der Primärpartition 4 verwendet Vergleichshash 11 von einem ersten Ausgangswert 6.1 in einen ersten Übergangswert 7.1 geändert. Insbesondere erfolgt hierzu eine Anwendung eines bitweisen Operators auf zumindest eines Teils des Hashwerts, beispielsweise eine bitwise-NOT Operation. Hierdurch werden die jeweiligen Bits des Hashwerts invertiert. Stattdessen könnte auch ein sogenannter bit-shift erfolgen. Andere Methoden zum Ändern des Hashwerts kommen ebenfalls infrage. Die Anwendung von bitweisen Operatoren ist jedoch besonders recheneffizient. Hierdurch lässt sich ein Anstieg von Latenzen bei der Durchführung des erfindungsgemäßen Verfahrens verhindern.

Durch das Ändern des ersten Ausgangswerts 6.1 in den ersten Übergangswert 7.1 wird verhindert, dass der Bootloader 2, wie in Figur 2b) gezeigt, im Fehlerfall nicht auf die Sicherungspartition 5 zugreift.

So kann nun der Bootloader 2 keine erfolgreiche Integritätsprüfung des Speicherinhalts des ersten logischen Blocks LB1 der Primärpartition 4 durchführen, sodass automatisch im Fehlerfall der Bootloader 2 zur Sicherungspartition 5 springen würde.

Anschließend erfolgt die Aktualisierung des Speicherinhalts zumindest eines der logischen Blöcke LB1, LB2 der Primärpartition 4. Hierzu muss eine Fallunterscheidung durchgeführt werden, ob ausschließlich der Speicherinhalt des ersten logischen Blocks LB1, ausschließlich des zweiten logischen Blocks LB2 oder aber der Speicherinhalt beider logischen Blöcke LB1 und LB2 aktualisiert werden soll.

Im Schritt 410 wird überprüft, ob sowohl der Speicherinhalt des ersten logischen Blocks LB1 und des zweiten logischen Blocks LB2 aktualisiert werden soll oder nicht. Im Schritt 411 wird überprüft, ob lediglich der Speicherinhalt des ersten logischen Blocks LB1 aktualisiert werden soll oder nicht.

Muss lediglich der Speicherinhalt des ersten logischen Blocks LB1 der Primärpartition 4 aktualisiert werden, so sind keine weiteren gesonderten Maßnahmen zur Wahrung der Bootfähigkeit des Mikrocontrollers 1 erforderlich. Im Schritt 412 kann der Speicherinhalt des ersten logischen Blocks LB1 der Primärpartition 4 aktualisiert werden. Im Schritt 413 kann der Mikrocontroller 1 neu gestartet werden. Würde es im Schritt 412 zu einem Fehlerfall kommen, woraufhin der Speicherinhalt des ersten logischen Blocks LB1 der Primärpartition 4 korrumpiert würde, so würde automatisch besagte hashwertbasierte Integritätsprüfung fehlerhaft sein, sodass der Bootloader 2 ohnehin auf die Sicherungspartition 5 zugreifen würde.

Im Schritt 412 wird ein neuer Programmcode in den ersten logischen Block LB1 der Primärpartition 4 geschrieben, sodass auch automatisch ein neuer Vergleichshash 11 für besagte Integritätsprüfung generiert wird. Somit muss der im Schritt 409 geänderte Hashwert nicht wiederhergestellt werden.

Wird hingegen lediglich der Speicherinhalt des zweiten logischen Blocks LB2 der Primärpartition 4 aktualisiert, so erfolgt dies im Schritt 414. Im Schritt 415 wird dann der Hashwert des ersten logischen Blocks LB1 vom ersten Übergangswert 7.1 zurück zum ersten Ausgangswert 6.1 geändert. Käme es nämlich im Schritt 414 zu einem unerwarteten Fehler, woraufhin der Speicherinhalt des zweiten logischen Blocks LB2 der Primärpartition 4 korrumpiert würde, so könnte dennoch der Bootloader 2 die Integritätsprüfung für den ersten logischen Block LB1 der Primärpartition 4 nicht erfolgreich durchführen, da der erste Übergangswert 7.1 nicht mit einem für den Speicherinhalt des ersten logischen Blocks LB1 der Primärpartition 4 aktuell berechneten Hashwert übereinstimmt. Somit würde auch hier der Bootloader 2 zur Sicherungspartition 5 weiterspringen. Dies erlaubt es auch hier im Fehlerfall den Bootprozess zuverlässig auszugestalten.

Nach dem Zurücksetzen des Hashwerts für den ersten logischen Block LB1 der Primärpartition 4 im Schritt 415 kann sich auch hier der Schritt 413 zum Neustarten des Mikrocontrollers 1 anschließen.

Gilt es hingegen sowohl den Speicherinhalt des ersten logischen Blocks LB1, als auch des zweiten logischen Blocks LB2 der Primärpartition 4 zu aktualisieren, so wird zuerst im Schritt 416 ein für den neu implementierten Programmcode ermittelter Vergleichshash 11 in Form des zweiten Ausgangswerts 6.2 in einen zweiten Übergangswert 7.2 geändert. Das Vorgehen zum Ändern des besagten Hashwerts kann analog zum Schritt 409 erfolgen. Da sich durch das Aktualisieren des Speicherinhalts des ersten logischen Blocks LB1 der Primärpartition 4 der Programmcode geändert hat, ändert sich auch der für die Integritätsprüfung berechnete Hashwert. Somit ist erneut das Ändern des Hashwerts für den Vergleich erforderlich.

Anschließend kann im Schritt 417 der Speicherinhalt des zweiten logischen Blocks LB2 der Primärpartition 4 aktualisiert werden. Im Schritt 418 kann nach dem erfolgreichen Aktualisieren des Speicherinhalts des ersten und zweiten logischen Blocks LB1, LB2 der Primärpartition 4 der zweite Übergangswert 7.2 zurück zum zweiten Ausgangswert 6.2 geändert werden. Nun kann auch hier der Schritt 413 durchgeführt werden und der Mikrocontroller 1 neu gestartet werden.

Das Ändern entsprechender Hashwerte, auch als "bitwise inversion" oder "hash reverse" bezeichnet, ist recheneffizient möglich. Die Laufzeit der entsprechenden Aktualisierung steigt hierdurch marginal oder gar nicht an. Um dennoch das Durchführen des Schritts 409 zu vermeiden, wenn sowohl der Speicherinhalt des ersten logischen Blocks LB1 und des zweiten logischen Blocks LB2 der Primärpartition 4 aktualisiert werden, könnte auch (nicht dargestellt) zuerst überprüft werden, welche logischen Blöcke LB1, LB2 aktualisiert werden müssen, sodass gegebenenfalls gar kein Hashwert geändert wird, oder maximal einmal ein Hashwert geändert werden muss.

Nach der Aktualisierung des Speicherinhalts des Mikrocontrollers 1 wird im Schritt 419 überprüft, ob der Bootloader 2 von der Primärpartition 4 booten kann. Ist dies nicht der Fall, so liegt gemäß des Schritts 407 erneut ein Fehler vor. Ist hingegen ein erfolgreiches Booten möglich, so wird im Schritt 420 der Speicherinhalt der Primärpartition 4 auf die Sicherungspartition 5 kopiert. Hierdurch wird gewährleistet, dass die aktuelle und lauffähige Programmversion auch auf die Sicherungspartition 5 übertragen wird. Im Schritt 421 kann besagter Speicherinhaltsübereinstimmungsflag 8 von FALSE zu TRUE zurückgeändert werden. Im Schritt 422 endet das erfolgreich durchgeführte Aktualisierungsverfahren.

Figur 5 zeigt, analog zu Figur 3, den Ablauf der Aktualisierungskampagne basierend auf dem erfindungsgemäßen Verfahren. Wie der Tabelle entnommen werden kann, ist es möglich für jeden Aktualisierungsschritt, trotz Fehlerfall (angedeutet durch eine Schraffur), aus der Primärpartition 4 oder der Sicherungspartition 5 eine lauffähige Programmversion auszulesen und einen entsprechenden Bootprozess durch den Bootloader 2 erfolgreich durchzuführen. Die Zuverlässigkeit des Mikrocontrollers 1 wird hierdurch gesteigert.

Ein korrumpierter Programmcode ist in der Tabelle durch ein "K" abgekürzt. Zeiten zu denen ein jeweiliger Hashwert in Form eines Ausgangswerts 6.1, 6.2 durch einen Übergangswert 7.1, 7.2 ersetzt ist, sind in der Tabelle durch die Bezeichnung "HASH" angedeutet. Die dritte Spalte der Tabelle zeigt den Schritt 405, also das Ersetzen des Speicherinhalts der Sicherungspartition 5 durch den lauffähigen Speicherinhalt der Primärpartition 4. Die vierte Spalte zeigt den Schritt 409, also das Aktivieren der Funktion des Bootloaders 2 zum Springen auf die Sicherungspartition 5 (BOOT Stop). Ab Spalte sieben wird diese Funktion durch Zurücksetzen des Hashwerts beendet (BOOT OK).

Figur 6 zeigt eine Draufsicht auf ein schematisiertes erfindungsgemäßes Fahrzeug 10. Das erfindungsgemäße Fahrzeug 10 umfasst ein erfindungsgemäßes Aktualisierungssystem 9. Das Aktualisierungssystem 9 umfasst zumindest einen ersten Mikrocontroller 1.1 und einen zweiten Mikrocontroller 1.2. Der erste Mikrocontroller 1.1.dient zur Ausführung des erfindungsgemäßen Aktualisierungsverfahrens. Dabei wird der zweite Mikrocontroller 1.2 aktualisiert. Bei dem Aktualisierungssystem 9 kann es sich insbesondere um das Steuergerät 12 eines Fahrzeuguntersystems handeln. Besonders bevorzugt ist der zweite Mikrocontroller 1.2 als Switch ausgeführt.

## Patentansprüche

1. Verfahren zum Aktualisieren einer Softwarekomponente auf einem Mikrocontroller (1), wobei der Mikrocontroller (1) einen Bootloader (2) und einen nichtflüchtigen Speicher (3) aufweist, unterteilt in wenigstens eine Primärpartition (4) und eine Sicherungspartition (5), jeweils wiederum aufweisend wenigstens einen ersten (LB1) und einen zweiten logischen Block (LB2), wobei im ersten logischen Block (LB1) der Programmcode einer Firmware gespeichert ist, im zweiten logischen Block (LB2) der Programmcode eines Zusatzprogramms gespeichert ist und auf der Sicherungspartition (5) eine Sicherungskopie des Speicherinhalts der Primärpartition (4) vorgehalten wird, und wobei der Bootloader (2) in einem Bootprozess zum Initiieren der Firmware auf den ersten logischen Block (LB1) auf der Primärpartition (4) zugreift, wobei der Bootloader (2) eine hashwertbasierte Integritätsprüfung des Speicherinhalts durchführt, und wobei der Bootloader (2) mit der Initialisierung der Firmware fortführt, wenn die Integritätsprüfung ein positives Ergebnis liefert oder auf den ersten logischen Block (LB1) der Sicherungspartition (5) zum Initiieren der Kopie des Programmcodes der Firmware zugreift, wenn die Integritätsprüfung ein negatives Ergebnis liefert,
**gekennzeichnet durch** die folgenden Verfahrensschritte:
- Ändern des für die Integritätsprüfung des ersten logischen Blocks (LB1) der Primärpartition (4) verwendeten Hashwerts von einem ersten Ausgangswert (6.1) in einen ersten Übergangswert (7.1), vor dem Aktualisieren der Softwarekomponente;
- Aktualisieren der Softwarekomponente in zumindest einem der logischen Blöcke (LB1, LB2) auf der Primärpartition (4); wobei
- wenn der Speicherinhalt des ersten und zweiten logischen Blocks (LB1, LB2) geändert wird, zuerst der Speicherinhalt des ersten logischen Blocks (LB1) geändert wird, dann der neu erhaltene Hashwert des ersten logischen Blocks (LB1) von einem zweiten Ausgangswert (6.2) in einen zweiten Übergangswert (7.2) geändert wird, dann der Speicherinhalt des zweiten logischen Blocks (LB2) geändert wird, und dann der Hashwert des ersten logischen Blocks (LB1) vom zweiten Übergangswert (7.2) zurück zum zweiten Ausgangswert (6.2) geändert wird; oder
- wenn der Speicherinhalt nur des ersten logischen Blocks (LB1) geändert wird, der neu erhaltene Hashwert des ersten logischen Blocks (LB1) als zweiter Ausgangswert (6.2) belassen wird; oder
- wenn der Speicherinhalt nur des zweiten logischen Blocks (LB2) geändert wird, der Speicherinhalt des zweiten logischen Blocks (LB2) geändert wird, und dann der Hashwert des ersten logischen Blocks (LB1) vom ersten Übergangswert (7.1) zurück zum ersten Ausgangswert (6.1) geändert wird; und
- Neustarten des Mikrocontrollers (1).

2. Verfahren nach Anspruch 1,
**dadurch gekennzeichnet, dass**
zum Ändern eines respektiven Hashwerts, ein Bitweiser Operator auf zumindest einen Teil des Hashwerts angewendet wird, insbesondere in Form von bitwise-NOT oder bit-shift.

3. Verfahren nach Anspruch 1 oder 2,
**dadurch gekennzeichnet, dass**
nach dem erfolgreichen Neustarten des Mikrocontrollers (1) und Booten von der auf der Primärpartition (4) vorgehaltenen Firmware der Speicherinhalt der Primärpartition (4) auf die Sicherungspartition (5) kopiert wird.

4. Verfahren nach einem der Ansprüche 1 bis 3,
**dadurch gekennzeichnet, dass**
vor dem Ändern des Hashwerts des ersten logischen Blocks (LB1) auf der Primärpartition (4) vom ersten Ausgangswert (6.1) zum ersten Übergangswert (7.1) überprüft wird, ob die Primärpartition (4) und die Sicherungspartition (5) denselben Speicherinhalt aufweisen, wobei:
- Wenn ein Booten von der Primärpartition (4) nicht möglich ist, der Speicherinhalt der Primärpartition (4) durch den Speicherinhalt der Sicherungspartition (5) ausgetauscht wird; oder
- Wenn ein Booten von der Primärpartition (4) möglich ist und sich der Speicherinhalt der Primärpartition (4) zur Sicherungspartition (5) unterscheidet, der Speicherinhalt der Primärpartition (4) auf die Sicherungspartition (5) kopiert wird.

5. Verfahren nach Anspruch 3 und 4,
**dadurch gekennzeichnet, dass**
vor dem Aktualisieren der Softwarekomponente ein Speicherinhaltsübereinstimmungsflag (8), beschreibend, ob die Primärpartition (4) und die Sicherungspartition (5) denselben Speicherinhalt aufweisen, von TRUE auf FALSE gesetzt wird und der Speicherinhaltsübereinstimmungsflag (8) nach erfolgter Aktualisierung der Softwarekomponente von FALSE auf TRUE gesetzt wird.

6. Verfahren nach einem der Ansprüche 1 bis 5,
**dadurch gekennzeichnet, dass**
eine Softwarekomponente auf einem als Switch ausgeführten Mikrocontroller (1) aktualisiert wird.

7. Verfahren nach Anspruch 6,
**dadurch gekennzeichnet, dass**
als Speicherinhalt des zweiten logischen Blocks (LB2) ein Regelsatz einer Firewall aktualisiert wird.

8. Aktualisierungssystem (9), umfassend einen ersten (1.1) und einen zweiten miteinander gekoppelten Mikrocontroller (1.2),
**dadurch gekennzeichnet, dass**
der erste Mikrocontroller (1.1) in einem Speichermedium ein Computerprogrammprodukt vorhält, welches durch Ausführung durch einen Prozessor des ersten Mikrocontrollers (1.1) den ersten Mikrocontroller (1.1) dazu in die Lage versetzt, eine Softwarekomponente des zweiten Mikrocontrollers (1.2) nach einem Verfahren nach einem der Ansprüche 1 bis 7 zu aktualisieren.

9. Fahrzeug (10),
**gekennzeichnet durch**
ein Aktualisierungssystem (9) nach Anspruch 8.

## Claims

1. Method for updating a software component on a microcontroller (1), the microcontroller (1) comprising a bootloader (2) and a non-volatile memory (3) subdivided into at least a primary partition (4) and a backup partition (5), each in turn having at least a first logical block (LB1) and a second logical block (LB2), the program code of firmware being stored in the first logical block (LB1), the program code of an add-on program being stored in the second logical block (LB2), and a backup copy of the memory contents of the primary partition (4) being held on the backup partition (5), and the bootloader (2) accessing, during a boot process, the first logical block (LB1) on the primary partition (4) in order to initiate the firmware, the bootloader (2) carrying out a hash-value-based integrity check of the memory contents, and the bootloader (2) proceeding with the initialization of the firmware if the integrity check yields a positive result, or accessing the first logical block (LB1) of the backup partition (5) to initiate the copy of the program code of the firmware if the integrity check yields a negative result,
**characterized by** the following method steps:
- changing the hash value used for the integrity check of the first logical block (LB1) of the primary partition (4) from a first starting value (6.1) to a first transition value (7.1) before updating the software component;
- updating the software component in at least one of the logical blocks (LB1, LB2) on the primary partition (4);
- if the memory contents of the first and the second logical block (LB1, LB2) are changed, the memory contents of the first logical block (LB1) being changed first, then the newly obtained hash value of the first logical block (LB1) being changed from a second starting value (6.2) to a second transition value (7.2), then the memory contents of the second logical block (LB2) being changed, and then the hash value of the first logical block (LB1) being changed from the second transition value (7.2) back to the second starting value (6.2); or
- if the memory contents of only the first logical block (LB1) are changed, the newly obtained hash value of the first logical block (LB1) being left as the second starting value (6.2); or
- if the memory contents of only the second logical block (LB2) are changed, the memory contents of the second logical block (LB2) being changed and then the hash value of the first logical block (LB1) being changed from the first transition value (7.1) back to the first starting value (6.1); and
- restarting the microcontroller (1).

2. Method according to claim 1,
**characterized in that**
in order to change a relevant hash value, a bitwise operator, in particular in the form of bitwise NOT or bit shift, is applied to at least a part of the hash value.

3. Method according to claim 1 or 2,
**characterized in that**
after the microcontroller (1) has been successfully restarted and booted from the firmware held on the primary partition (4), the memory contents of the primary partition (4) are copied to the backup partition (5).

4. Method according to any of claims 1 to 3,
**characterized in that**
before changing the hash value of the first logical block (LB1) on the primary partition (4) from the first starting value (6.1) to the first transition value (7.1), it is checked whether the primary partition (4) and the backup partition (5) have the same memory contents:
- if booting from the primary partition (4) is not possible, the memory contents of the primary partition (4) being replaced by the memory contents of the backup partition (5); or
- if booting from the primary partition (4) is possible and the memory contents of the primary partition (4) differ from the backup partition (5), the memory contents of the primary partition (4) being copied to the backup partition (5).

5. Method according to claim 3 and 4,
**characterized in that**
before updating the software component, a memory contents match flag (8) describing whether the primary partition (4) and the backup partition (5) have the same memory contents is set from TRUE to FALSE, and the memory contents match flag (8) is set from FALSE to TRUE after the software component has been updated.

6. Method according to any of claims 1 to 5,
**characterized in that**
a software component on a microcontroller (1) designed as a switch is updated.

7. Method according to claim 6,
**characterized in that**
a rule set of a firewall is updated as memory contents of the second logical block (LB2).

8. Update system (9) comprising a first microcontroller (1.1) and a second microcontroller (1.2) connected to one another,
**characterized in that**
the first microcontroller (1.1) provides a computer program product in a storage medium, which computer program product, when executed by a processor of the first microcontroller (1.1), allows the first microcontroller (1.1) to update a software component of the second microcontroller (1.2) according to a method according to any of claims 1 to 7.

9. Vehicle (10)
**characterized by** an update system (9) according to claim 8.

## Revendications

1. Procédé pour la mise à jour d'un composant logiciel sur un microcontrôleur (1), dans lequel le microcontrôleur (1) présente un élément d'amorçage (2) et une mémoire non volatile (3), divisée en au moins une partition primaire (4) et une partition de sauvegarde (5), présentant à leur tour respectivement au moins un premier (LB1) et un second bloc logique (LB2), dans lequel le code de programme d'un microprogramme est mémorisé dans le premier bloc logique (LB1), le code de programme d'un programme supplémentaire est mémorisé dans le second bloc logique (LB2) et une copie de sauvegarde du contenu de mémoire de la partition primaire (4) est conservée sur la partition de sauvegarde (5), et dans lequel l'élément d'amorçage (2) accède au premier bloc logique (LB1) sur la partition primaire (4) dans un processus d'amorçage pour l'initiation du microprogramme, dans lequel l'élément d'amorçage (2) met en œuvre un contrôle d'intégrité basé sur des valeurs de hachage du contenu de mémoire, et dans lequel l'élément d'amorçage (2) continue avec l'initialisation du microprogramme lorsque le contrôle d'intégrité fournit un résultat positif ou accède au premier bloc logique (LB1) de la partition de sauvegarde (5) pour initier la copie du code de programme du microprogramme lorsque le contrôle d'intégrité fournit un résultat négatif,
**caractérisé par** les étapes de procédé suivantes :
- changement de la valeur de hachage utilisée pour le contrôle d'intégrité du premier bloc logique (LB1) de la partition primaire (4) d'une première valeur initiale (6.1) à une première valeur de transition (7.1), avant la mise à jour du composant logiciel ;
- mise à jour du composant logiciel dans au moins un des blocs logiques (LB1, LB2) sur la partition primaire (4) ; dans lequel
- lorsque le contenu de mémoire des premier et second blocs logiques (LB1, LB2) est changé, d'abord le contenu de mémoire du premier bloc logique (LB1) est changé, puis la valeur de hachage nouvellement obtenue du premier bloc logique (LB1) change d'une seconde valeur initiale (6.2) à une seconde valeur de transition (7.2), puis le contenu de mémoire du second bloc logique (LB2) est changé, puis la valeur de hachage du premier bloc logique (LB1) est changée de la seconde valeur de transition (7.2) pour revenir à la seconde valeur initiale (6.2) ; ou
- lorsque le contenu de mémoire du premier bloc logique (LB1) uniquement est changé, la valeur de hachage nouvellement obtenue du premier bloc logique (LB1) est laissée comme seconde valeur initiale (6.2) ; ou
- lorsque le contenu de mémoire du second bloc logique (LB2) uniquement est changé, le contenu de mémoire du second bloc logique (LB2) est changé, puis la valeur de hachage du premier bloc logique (LB1) est changée de la première valeur de transition (7.1) pour revenir à la première valeur initiale (6.1) ; et
- redémarrage du microcontrôleur (1).

2. Procédé selon la revendication 1,
**caractérisé en ce que**
pour le changement d'une valeur de hachage respective, un opérateur bit à bit est appliqué à au moins une partie de la valeur de hachage, en particulier sous forme de NON bit à bit ou de décalage de bit.

3. Procédé selon la revendication 1 ou 2,
**caractérisé en ce que**
après le redémarrage réussi du microcontrôleur (1) et l'amorçage à partir du microprogramme conservé sur la partition primaire (4), le contenu de mémoire de la partition primaire (4) est copié sur la partition de sauvegarde (5).

4. Procédé selon l'une des revendications 1 à 3,
**caractérisé en ce que**
avant le changement de la valeur de hachage du premier bloc logique (LB1) sur la partition primaire (4) de la première valeur initiale (6.1) à la première valeur de transition (7.1), on vérifie si la partition primaire (4) et la partition de sauvegarde (5) présentent le même contenu de mémoire, dans lequel :
- lorsque l'amorçage à partir de la partition primaire (4) n'est pas possible, le contenu de mémoire de la partition primaire (4) est remplacé par le contenu de mémoire de la partition de sauvegarde (5) ; ou
- lorsque l'amorçage à partir de la partition primaire (4) est possible et que le contenu de mémoire de la partition primaire (4) est différent de celui de la partition de sauvegarde (5), le contenu de mémoire de la partition primaire (4) est copié sur la partition de sauvegarde (5).

5. Procédé selon les revendications 3 et 4,
**caractérisé en ce que**
avant la mise à jour du composant logiciel, un indicateur de correspondance de contenu de mémoire (8), décrivant si la partition primaire (4) et la partition de sauvegarde (5) présentent le même contenu de mémoire, passe de TRUE à FALSE, et l'indicateur de correspondance de contenu de mémoire (8) passe de FALSE à TRUE après la mise à jour réussie du composant logiciel.

6. Procédé selon l'une des revendications 1 à 5,
**caractérisé en ce que**
un composant logiciel est mis à jour sur un microcontrôleur (1) exécuté en tant que commutateur.

7. Procédé selon la revendication 6,
**caractérisé en ce que**
un jeu de règles d'un pare-feu est mis à jour en tant que contenu de mémoire du second bloc logique (LB2).

8. Système de mise à jour (9) comprenant un premier (1.1) et un second microcontrôleur (1.2) couplés l'un à l'autre,
**caractérisé en ce que**
le premier microcontrôleur (1.1) conserve un produit programme d'ordinateur dans un support de stockage, lequel produit programme d'ordinateur permet, par l'exécution par un processeur du premier microcontrôleur (1.1), au premier microcontrôleur (1.1) de mettre à jour un composant logiciel du second microcontrôleur (1.2) selon un procédé selon l'une des revendications 1 à 7.

9. Véhicule (10),
**caractérisé par**
un système de mise à jour (9) selon la revendication 8.
